# EUROPEAN PATENT APPLICATION

(11) **EP 1 071 028 A2**
(43) Date of publication of application: **24.01.2001**
(21) Application number: 00303868.4
(22) Date of filing: 09.05.2000
(51) Int. Cl.: G06F 17/60

(54) **Computer system for automatically tracking transactions**

(30) Priority: 20.07.1999 GB 9916869
(71) Applicant: International Computers Ltd., London, EC2A 1SL (GB)
(72) Inventor: Bunyan, Roy James, Eversley, Hook, Hampshire RG27 0PT (GB); Stokes, Christopher John, Bracknell, Berkshire RG42 3SH (GB); Tull, Graham, Slough, Berkshire SL1 2GD (GB)
(74) Representative: Guyatt, Derek Charles

(57) **Abstract**

A computer system automatically tracks a transaction involving a number of parties, such as a property purchase. The system keeps a diary (17) storing expected dates of progress reports on the transaction from the parties. Progress reports are received from the parties, analysed, and used to update the diary. The system periodically checks (22) the diary to detect overdue progress reports, and a reminder is automatically sent to a party from whom a progress report is overdue. In addition, an alert may be sent to a specified party. The consolidated reports may be viewed, e.g. over the Internet.

## Description

### Background to the Invention

This invention relates to a computer system for automatically tracking a transaction involving a number of parties. The invention is particularly, although not exclusively, concerned with a system for monitoring the progress of a property (real estate) purchase.

The process of buying a property is complicated, involving a number of different parties, such as financial services institutions, solicitors (attorneys), and estate agents (realty agents) . At present, at least one financial services institution offers its customers the services of a Mortgage Specialist, to manage the purchasing process. However, this service is clearly very time-consuming and expensive for the financial services institution to provide.

One object of the present invention is to provide an improved and/or more cost effective way of providing such a service.

### Summary of the Invention

According to the invention, a computer system for automatically tracking a transaction involving a plurality of parties (e.g. a property purchase transaction) comprises:
(a) a diary for storing expected dates of progress reports on the transaction from the parties;
(b) means for receiving progress reports from the parties;
(c) means for automatically updating the expected dates stored in the diary, when the progress reports are received; and
(d) means for periodically checking the diary to detect overdue progress reports, and for automatically sending a reminder to a party from whom a progress report is overdue.

The system may also automatically send an alert message to a specified party (e.g. the purchaser) if a potential problem is detected, e.g. if a progress report is overdue by more than a predetermined amount, or if one of the parties is not consistently sending progress reports.

The system preferably also includes:
(a) means for combining the progress reports received from the parties to produce a consolidated status report; and
(b) means for permitting an authorised person (e.g. the purchaser, or a financial services institution official) to view the consolidated status report (e.g. over the Internet).

### Brief Description of the Drawings

Figure 1 is a block diagram of a computer system embodying the invention.
Figures 2 and 3 are flow charts showing the operation of a home buyer agent within the computer system.
Figures 4 and 5 are schematic representations of screen displays used in the system.

### Description of an Embodiment of the Invention

One embodiment of the invention will now be described by way of example with reference to the accompanying drawings.

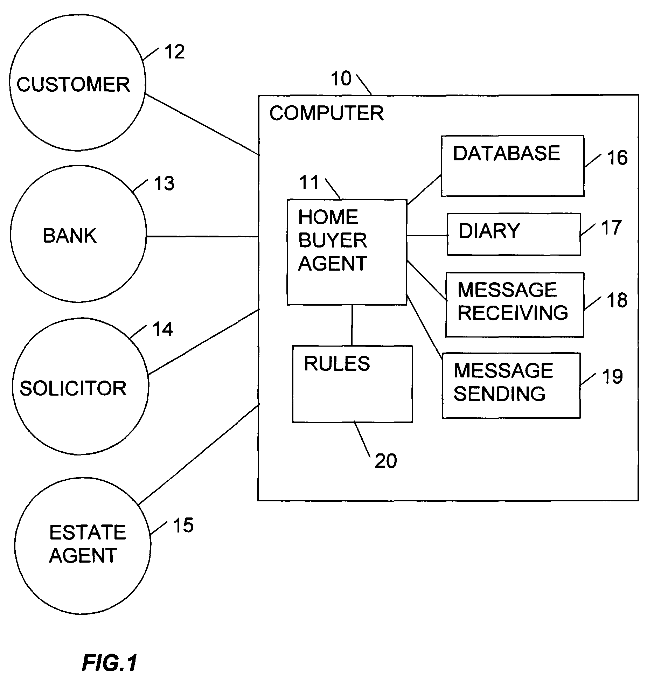

The embodiment of the invention to be described provides a service to a number of individual customers, to assist them in managing property purchase transactions. Referring to Figure 1, the service is provided by a computer 10 which runs a program referred to herein as a home buyer agent 11. A separate instance of the home buyer agent program is run for each transaction currently being managed. The home buyer agent communicates with the customer 12 (i.e. the purchaser), and also with other parties involved in the transaction, such as financial services institution 13, solicitor 14, and estate agent 15.

The home buyer agent 11 makes use of the following elements in the computer 10:
- A transaction database 16.
- A diary system 17.
- A message receiving system 18.
- A message sending system 19.
- A set of processing rules or algorithms 20.

The transaction database 16 holds the following data for the transaction:
- The names and details of the parties involved (customer, financial services institution, solicitor, estate agent).
- Details of the property being purchased.
- A list of the key events associated with the property purchase and their dates (actual or estimated). These key events may include receipt of draft contracts of sale, receipt of local and land searches, exchange of contracts and completion.
- The text of any progress reports received, and the dates on which they were received.

The diary system 17 is used to keep track of the expected dates of progress reports from the parties 13 - 15. When the system is initially set up for a particular customer, entries will be made in the diary system for the expected dates of initial reports from each of the parties.

The message receiving system 18 includes an Inbox, which is identified by an address, unique to the current transaction. The Inbox receives progress report messages from the parties involved in the transaction. Messages may be sent from the parties to the Inbox in various ways, including but not limited to electronic mail, direct entry by human operators following receipt of post, facsimile or telephone messages, output from voice recognition systems or optical character recognition systems used on post or facsimile messages.

The message sending system 19 includes an Outbox, which holds messages for sending to the parties 12 - 15. The messages sent from the Outbox may be delivered by various means, including but not limited to electronic mail, messages sent to mobile telephones using the Short Messaging System (SMS), messages delivered to human operators to forward to recipients by telephone, post or facsimile, automatically produced facsimile or postal messages or automated voice messages.

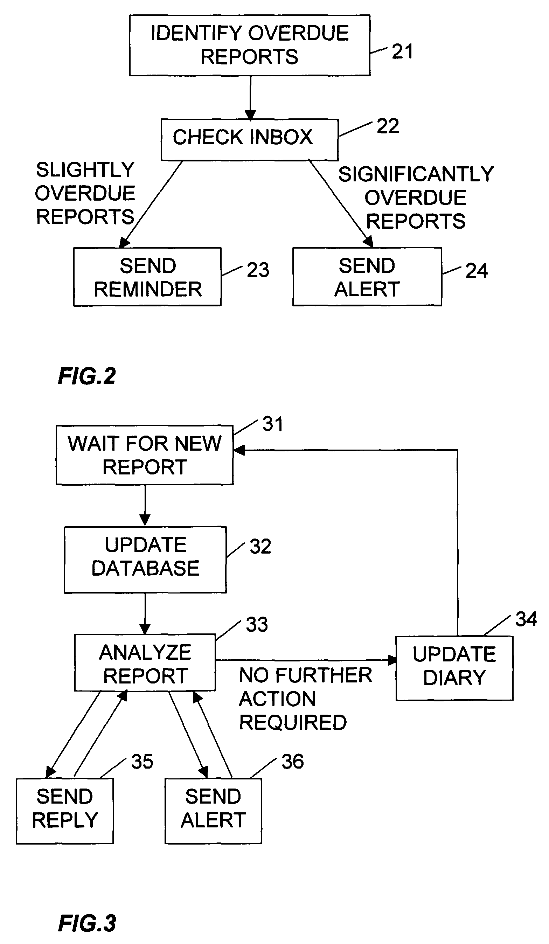

Figures 2 and 3 show the operation of the home buyer agent 11 in more detail.

Referring to Figure 2, at the start of each day, the home buyer agent 11 performs the following processing.

(Step 21) The home buyer agent first checks the diary 17, to identify any overdue reports.

(Step 22) The home buyer agent also checks the Inbox to see whether any overdue reports have just been received. The home buyer agent determines whether the overdue reports (if any) are only slightly overdue, or significantly overdue, as defined by the processing rules 20. For example, the processing rules may specify that reports overdue by more than one week are to be regarded as significantly overdue.

(Step 23) For reports that are only slightly overdue, the home buyer agent automatically sends a reminder to the party from whom the report is expected (unless a reminder has already been sent).

(Step 24) For reports that are significantly overdue, the home buyer agent automatically sends an alert to the customer (unless an alert has already been sent).

Following the initial actions shown in Figure 2, the home buyer agent enters a loop as shown in Figure 3.

(Step 31) The home buyer agent waits for receipt of a new progress report from one of the parties.

(Step 32) When a progress report is received, the system interprets or parses it as required, in order to facilitate further analysis. The transaction database is then updated according to the contents of the message.

In this example, it is assumed that each progress report includes a text field. This is extracted from the report and filed in the transaction database along with its date of receipt.

It is also assumed in this example that each progress report from the solicitor further includes a table, which advantageously would be in a predefined format, listing the key events and their dates (actual or estimated). These are used to update the key events data held in the transaction database.

(Step 33) The report is then passed to an analysis process, which analyses it according to the processing rules 20, to determine what action should be taken.

(Step 34) In most cases, no further action is required on the report, apart from updating the diary with the next expected date for a progress report from the party concerned. This entry may be based on the content of the present report (e.g. if the party has specified when the next report will be sent), or derived from the processing rules (e.g. the rules may specify that the next report should be within two weeks). The agent then returns to the wait state.

(Step 35) In some cases, however, a reply message may be automatically generated and sent to the report sender. For example if a progress report specifies an unacceptable date for the next report, the system may generate a message requesting an earlier date.

(Step 36) In other cases, an alert message may be sent to the customer. For example, if the progress report indicates that dates have slipped by more than a predetermined threshold amount, the system may generate an alert to warn the customer of this.

The customer is able log on to the service at any time via the Internet, to obtain information about the progress of the transaction. After entering an appropriate user name and password, the user is presented with a main menu (not shown). The main menu includes the following options:
- View status reports.
- View key dates.
- Other services.

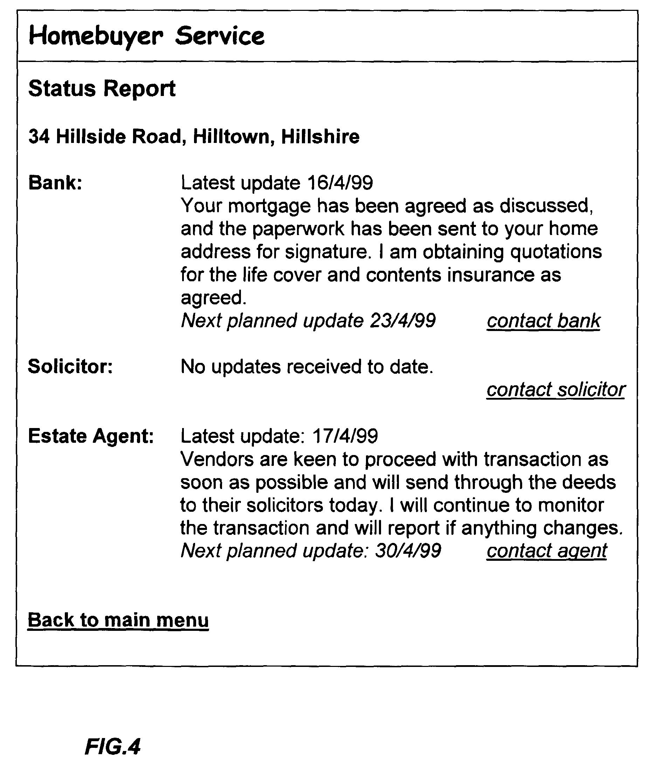

If the "View status reports" option is selected, the customer is presented with a screen as shown in Figure 4. This includes the latest status reports from the financial services institution, the solicitor, and the estate agent, stored in the transaction database. The system thus enables the customer to access an up-to-date consolidated status report on the transaction without having to contact each of the parties. This screen also includes links, allowing the customer to contact any of the parties by electronic mail, if desired.

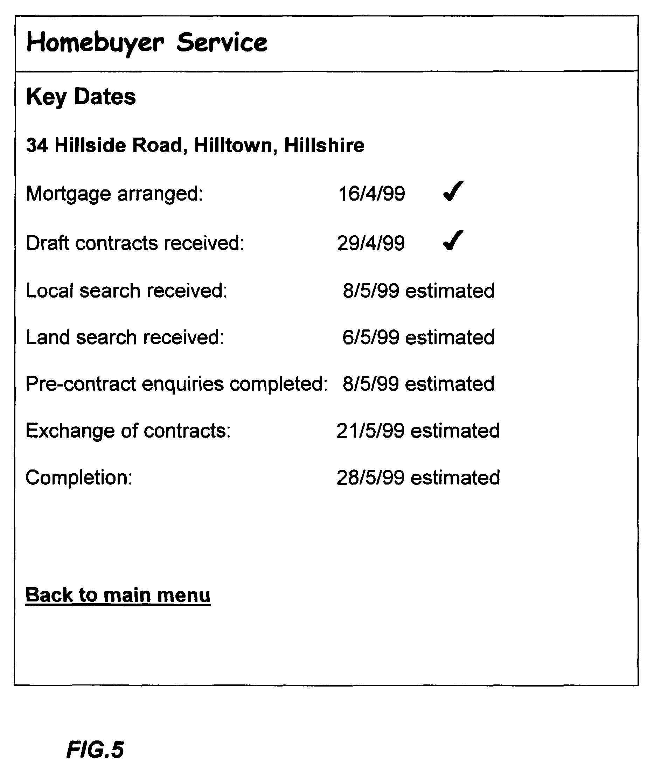

If the "View key dates" option is selected, the customer is presented with a screen as shown in Figure 5. This includes a list of the key events associated with the transaction, from agreeing the mortgage through to exchange and completion, along with their dates (actual or estimated).

If the "Other services" option is selected, the customer is presented with a screen (not shown) containing links to a number of services appropriate to the current stage of the transaction. For example, if completion is expected shortly, this screen would contain a link to services for obtaining removals quotations, ordering change of address cards, and for automatically advising councils, utilities etc. of the impending move, as well as finding the best deals on gas and electricity in the new property.

### Some possible modifications

It will be appreciated that many modifications may be made to the system described above without departing from the scope of the present invention.

Such modifications may involve multiple different delivery mechanisms for the sending and receiving of messages, and multiple different access channels for the customer to obtain details of the latest status of the transaction, such as the use of Interactive Television and facsimile messages.

The application could also be used as an internal system by the financial services institution or another party, who would then contact the customer as required to advise of the latest status.

Instead of the service being provided on a central server computer as described above, it might be run as a program on the user's personal computer.

## Claims

1. A computer system for automatically tracking a transaction involving a plurality of parties, the system comprising:
(a) a diary (17) for storing expected dates of progress reports on the transaction from the parties;
(b) means (18) for receiving progress reports from the parties;
(c) means (11) for automatically updating the expected dates stored in the diary, when the progress reports are received; and
(d) means (11,19) for periodically checking the diary to detect overdue progress reports, and for automatically sending a reminder to a party from whom a progress report is overdue.

2. A computer system according to Claim 1 wherein the means for receiving progress reports from the parties and the means for automatically sending a reminder to a party comprise means for receiving and sending electronic mail messages.

3. A computer system according to Claim 1 or 2, including means for automatically sending an alert message to a specified party if a potential problem is detected.

4. A computer system according to Claim 1 or 2 including means for automatically sending an alert message to a specified party if a progress report is overdue by more than a predetermined amount.

5. A computer system according to any preceding claim, further including:
(a) means for combining the progress reports received from the parties to produce a consolidated status report; and
(b) means for enabling an authorised person to view the consolidated status report.

6. A computer system according to Claim 5 comprising means for enabling the authorised person to view the consolidated status report over the Internet.

7. A computer system according to Claim 6, further including means for automatically generating, in association with said consolidated status report, Internet links to a number of services appropriate to the current state of the transaction.

8. A computer system according to any preceding claim, wherein the expected date of a progress report from a party is derived from the content of a previous progress report received from that party.

9. A computer system according to Claim 8 further including means for automatically sending to a party a reply message requesting an earlier report date, if the expected date is unacceptable.

10. A method for automatically tracking a transaction involving a plurality of parties, comprising operating a computer system to perform the following steps:
(a) storing in a diary expected dates of progress reports on the transaction from the parties;
(b) receiving progress reports from the parties;
(C) automatically updating the expected dates stored in the diary, when the progress reports are received; and
(d) periodically checking the diary to detect overdue progress reports, and automatically sending a reminder to a party from whom a progress report is overdue.

11. A method according to Claim 10 wherein the steps of receiving progress reports from the parties and automatically sending a reminder to a party comprise receiving and sending electronic mail messages.

12. A method according to Claim 10 or 11, including automatically sending an alert message to a specified party if a potential problem is detected.

13. A method according to Claim 10 or 11 including automatically sending an alert message to a specified party if a progress report is overdue by more than a predetermined amount.

14. A method according to any one of Claims 10 to 13, including:
(a) combining the progress reports received from the parties to produce a consolidated status report; and
(b) enabling an authorised person to view the consolidated status report.

15. A method according to Claim 14 wherein the authorised person is enabled to view the consolidated status report over the Internet.

16. A method according to Claim 15, further including automatically generating, in association with said consolidated status report, Internet links to a number of services appropriate to the current state of the transaction.

17. A method according to any one of Claims 10 to 16, including deriving the expected date of a progress report from a party from the content of a previous progress report received from that party.

18. A method according to Claim 17 further including automatically sending to a party a reply message requesting an earlier report date, if the expected date is unacceptable.

19. A computer program comprising code adapted to perform, when said program is run on a computer system, a method according to any of Claims 10 to 18.
